# EUROPEAN PATENT APPLICATION

(11) **EP 1 988 217 A1**
(43) Date of publication of application: **05.11.2008**
(21) Application number: 07708142.0
(22) Date of filing: 07.02.2007
(51) Int. Cl.: E02D 1/02, G01N 3/00, G01N 3/40

(54) **SEARCHING METHOD FOR ACQUIRING GROUND INFORMATION**

(30) Priority: 08.02.2006 JP 2006031360
(71) Applicant: Kiso-Jiban Consultants Co., Ltd., Tokyo 102-8220 (JP); Doyu Daichi Co., Ltd., Hiroshima-city, Hiroshima 733-0812 (JP); Maeda, Yoshito, Munakata city, Fukuoka 811-4163 (JP); Toyooka, Yoshinori, Chiba-city, City 262-0025 (JP)
(72) Inventor: MAEDA, Yoshito, Munakata city, Fukuoka 811-4163 (JP); TOYOOKA, Yoshinori, Chiba- city Chiba 262-0025 (JP); SAKATE, Michiaki, Hiroshima- city, Hiroshima 733-0812 (JP); SAKAI, Katsuo, Tokyo 157-0077 (JP)
(74) Representative: Sajda, Wolf E.
(86) International application number: PCT/JP2007/052098
(87) International publication number: WO 2007/091589

(57) **Abstract**

Provided is a searching method for acquiring ground information by mounting a resistor on the leading end of a rod and by piercing the ground with the same. The searching method acquires the ground information on the strength and deformation of the ground, by piercing the ground with the resistor including a frustum of a circular cone or an arcuate member containing a deficient sectional shape, in which the angle made between the side face of the resistor having blades in the same direction as the piercing direction is 5° or less, upward or outward from the leading end of the resistor, thereby to measure a plurality of transverse ground reactions, and by rotating the resistor having the blades at that depth thereby to measure a plurality of ground shearing forces. The main information such as C, ϕ and E can be determined in the ground search by inserting an apparatus of one kind into the search depth without moving it up and down. Thus, an original position ground search can be performed speedily and lightly and applied to various grounds.

## Description

### Technical Field

This invention is an in situ test method for acquiring ground information such as shear strength and modulus of deformation by piercing a resistor through the ground.

### Background Technology

Using a resistor penetrating through the ground, the ground is forced to deform by Δ in the horizontal direction, thus generating lateral ground reaction P (see Fig. 1). Under this stress condition, the ground's shear strength can be expressed as τ = C + Pv tanϕ (see Figs. 2 and 3) and the normal stress Pv (effective stress when ground water is present) is calculated. Cohesive soil mainly consists of cohesion C that is irrelevant to Pv. Sand is defined by a function of internal friction angle ϕ and a strength that is proportional to Pv.
Intermediate soil has both C and ϕ. Moreover, there are cases where residual strength τr generated after failure is required other than maximum shear strength. In addition, the modulus of deformation E is also significant, which is determined using the lateral ground reaction generated when the ground is forced to deform by Δ. Therefore, there are three primary pieces of ground information necessary for design of structures which are C, ϕ and E.

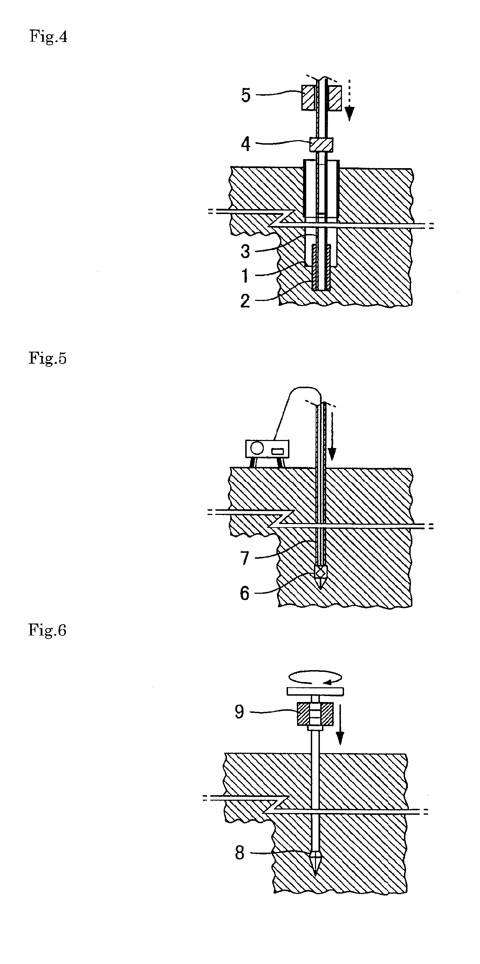

The Standard Penetration Test (SPT), illustrated in Fig. 4, is a typical in situ ground test method which is most widely used. In this method, boring is conducted by knocking the head 4 of a boring rod 3. The number of blows (N-value) for the resistor 2, attached at the base of the hole 1, to penetrate through the ground by 30 cm is counted. Similar to this method is the N vane method which also measures shear strength τ besides the N-value and uses a resistor attached with wind vanes around the pipe. The resistor penetrates the ground and is forced to rotate in order to measure the shear strength τ under Pv that is near lateral stress condition. A more simple method is the dynamic cone penetration test, which uses a cone instead of a pipe as a resistor.

Figure 5 illustrates the electrical static cone penetration test where the cone resistor 6 of point angle 2θ = 60° (θ is the angle of penetration) that is set at the tip of rod 7 is allowed to penetrate through the ground statically (without blowing or vibration). The forcrunner of this method is the Dutch cone penetrometer test, which classifies ground types using an empirical chart. It measures the frictional strength f and pore water pressure Ud besides cone penetration resistance q. Moreover, a similar and very simple method is the portable cone penetration test where the cone of point angle 2θ = 30° is forced by the weight of the measurer.

Patented devices related to cone penetration tests are supplementary apparatuses for reducing penetration resistance of multistage sensors used in the following purposes. In determining the change of ground information (soil pressure, pore water pressure, etc.) according to time are used pipes of equal diameter as the reactor that penetrates the ground under constant speed. Another uses a load cell that is free to expand and contract in the direction normal to its axis and multistage type of sensor under high pressure. In the case of displacement control, the multistage type of sensor attached with an earth pressure gauge penetrates the tapered soil sample (diameter or width increases in a later penetration) under constant speed. In addition, non-patented devices are step blade and tapered blade. The former is a flat plate equipped with an earth pressure gauge while the later is used for estimating earth pressure.

In the Swedish sounding method as illustrated in Fig. 6, a weight 9 is put over the twisted quadrangular pyramid shaped resistor 8 to determine the relationship of load and subsidence. Also, in the case of ground that does not subside under 100 kgf of load, the resistor is forced to rotate in order to measure the hardness of the ground according to subsidence and the number of rotation. It is commonly applied in ground test of detached houses. This method is basically automated and test specifications are not modified as found in related patents.

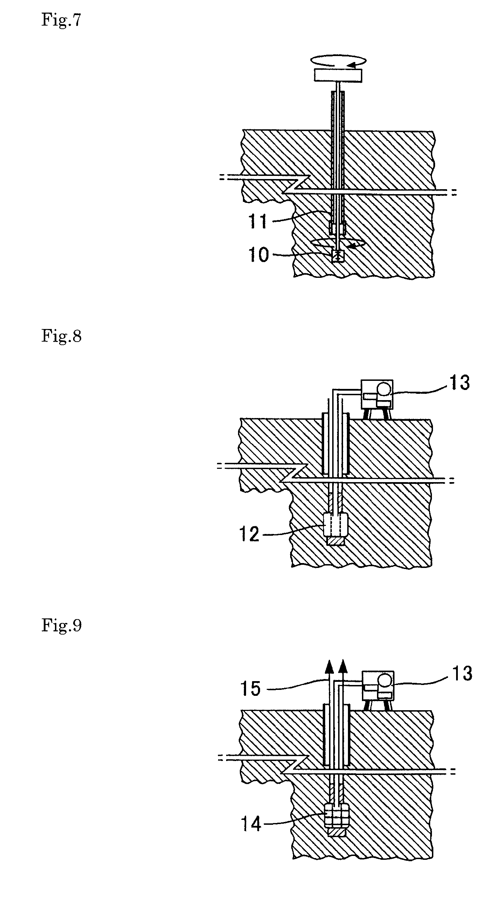

The in situ vane shear test shown in Fig. 7 is mainly applied in soft cohesive soil ground. The cross-shaped vane 10 is pushed into the ground in the outer tube of a double tube rod 11 and is rotated, forcing the ground to shear cylindrically, thus a direct measurement of strength constant C is possible. The above-mentioned N vane method is the combination of the SPT and this vane test. Therefore, currently, the test methods presented in Figs. 4 to 7 cannot directly measure C, ϕ and E.

Figure 8 illustrates the lateral loading test in bore. The pressure cell 12 consists of a rubber tube that is installed in a borehole and is pressurized to expand using an apparatus 13 set on the ground. The modulus of deformation E of the ground is measured based on the pressure and amount of change in bore diameter. There are two kinds of this method: one is the pre-boring method where the pressure cell is inserted after boring; and the other is the self-boring method where the pressure cell is inserted while boring.

As illustrated in Fig 9, shear strength τ is measured by applying a drawing force to the gauge pipe under pressure where a shear plate is attached on the tip of a pressure cell to prevent slipping. There is a method called pressurization shear test in a borehole which determines C, ϕ and E by performing repeated shear tests of gradually increased pressurization. It can be drawn from the above that the only method which can measure C, ϕ and E by a single test is the pressurization shear test in a borehole. However, since it requires the boring of ground, it is time-consuming and thus, inefficient.
- Patent literature 1:: Released 1988-297621 Apparatus use for both penetration test and vane test
- Patent literature 2:: Released 1982-17978 Ground probe method and its apparatus
- Patent literature 3:: Released 1982-184116 Ground test method and its apparatus
- Patent literature 4:: Released 1982-184117 Friction reduction apparatus for ground
- Patent literature 5:: Released 2001-20268 Ground probe apparatus for penetration and rotation of resistor
- Patent literature 6:: Released 1972-44930 Shearing test apparatus for ground
- Patent literature 7:: Released 2001-32252 Load test method on borehole and tubular load test apparatus for holding hole
- Patent literature 8:: Released 1996-285747 Shear test method on borehole for soft bedrock, and its apparatus
- Non-patent literature 1:: JIS A 1219 Standard penetration test method
- Non-patent literature 2:: JIS A 1220 Dutch Cone penetrometer method
- Non-patent literature 3:: JIS A 1221 Swedish sounding test method
- Non-patent literature 4:: JGS 1411 In situ vane shear test method
- Non-patent literature 5:: JGS 1421 Lateral load test method on borehole
- Non-patent literature 6:: JGS 1431 Portable cone penetration test
- Non-patent literature 7:: JGS 1435 Electrical static cone penetration test
- Non-patent literature 8:: JH (Former NEXCO) In situ shear friction test SGIFT

### Disclosure of the Invention

### Problems that the invention tries to solve

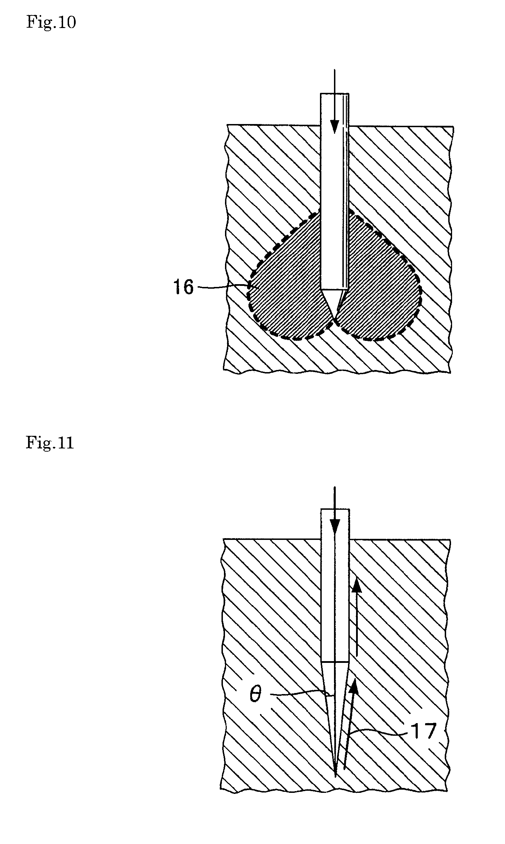

The first problem is to seek a test method that can measure design ground constants C, ϕ and E in a single test. Presently, the most commonly applied methods are SPT and cone penetration tests which estimate design ground constants such as N and qt, indirectly and relatively. Furthermore, in the cone penetration test shown in Figs. 10 and 11, the aim is not to find the ground constants but the ground's resistance relative to strength using the penetration resistance of a cone (2θ = 60°) that can easily penetrate through the soil. Since a large failure region that varies with ground property generates around the cone-shaped resistor, it is proven that cohesion and penetration resistance are not proportional, even in cohesive soil. In addition, although τ is measurable from the N vane test, it can not measure C and ϕ separately. The in situ vane shear test can measure cohesion C in soft cohesive soil but can not measure C and ϕ separately in other grounds. The modulus of deformation E is measurable using a lateral load test on a borehole. Only the pressurization shear test on a borehole can measure C, ϕ and E by a single test. There is no simple method for measuring C, ϕ and E directly in other technical standard's test methods. The reason for this is because the basic specifications of standardized and popularly used in situ tests are based on old manufacturing and measurement technologies of the past 50 to 70 years. It can be recognized from Figs. 4 to 7, that even if current technologies are applied for better automation, it is extremely difficult to obtain design constants such as C, ϕ and E with required accuracy.

The second problem is the desire to improve the test method Using the same principle, wide applicability to different grounds from soft to moderately hard grounds is desirable. Also, highly accurate results of detailed tests and quick interpolation of medial stratum by preliminary tests are expected. On the other hand, at present, test methods of different principles are applied (see Figs. 4 to 9) due to the stiffness of the ground and required test precision, since the interpretation of ground information results is ambiguous.

The third problem is how to measure continuously and quickly at low cost. A load test in a borehole takes a long time in performing one test and it can only measure one to few a meters of depth. Figures 4 to 9 show the main specification of in situ tests on the premise that the basic specifications are manual operation and record keeping by visual inspection.
There is a problem in the basic specification if speed is intended to be improved, since precision abruptly declines when collapse occurs in the borehole during fluctuations of the measuring apparatus and rod.

The fourth problem is demand for better penetration resistance reaction apparatus. It should be light weight and have stronger penetration capacity. Problems regarding conventional cone penetration tests are listed as follows.
(1) In setting the reaction anchor, it requires extra time and labor besides measuring and the test becomes impossible in a location where setting is difficult.
(2) It is expensive to carry weights from a few to tens of tons. Also, it is not suitable in countries like Japan, for vehicles loaded with heavy weights to transport in narrow and inclined paths in order to conduct several minor tests.
(3) Although the penetration test uses light apparatus and is usually efficient in many cases, it produces noise pollution caused by metallic sound during blowing.

It may become more clear in the following explanation if the attached figures herein, the introduction of this invention and its purposes as well as its new features are compared. Provided that the figures serve wholly for commentary purposes, and do not limit the technical scope of this invention.

### Solution to the above problems

With regard to the first problem on how to measure C, ϕ and E by conducting one test, a method based on a pressurization shearing test in a borehole is proposed. This method also deals with other problems and provides new ground information that is industrially valuable.

In order to solve the second problem, which aims for a widely applicable and highly accurate detailed test as well as a speedy preliminary test for interpolation, the method should be able to penetrate statically in soft grounds, dynamically in relatively hard grounds and by boring (like a pre-boring test and trimming test) in harder grounds.

To solve the third problem on how to make the test method speedy and continuous, the specification of a cone penetration test is considered as a target. Thus, the loading and unloading of the measuring device (penetration resistor) must be done, in general, only once in every test spot (in current pressurization shear tests in a borehole, loading and unloading is not done at every measure depth) and the penetration measurement must not be in meter intervals but by a few centimeters or a few decimeters.

Similar to the second problem, the fourth problem on making the apparatus light and have larger penetration capacity can be solved by combining the dynamic (blowing) penetration and boring method. Using this solution, uneconomical heavy apparatus and anchorage processes can be omitted. In addition, by inserting cushion materials between the knocking head 4 and hammer 5, noise due to percussion can be reduced and rapid loading by impulse force becomes possible. According to the above mentioned basic concepts, details about a pressurization shear apparatus for penetration are described below.

The first claim of this invention is discussed as follows. A resistor is mounted on the tip of a rod and it is made to penetrate in order to obtain ground information. The vane of the resistor is rotated in the penetration direction in order to avoid disturbing the ground. Usually, vanes are arranged symmetrical to the axis although in special cases only one vane is required. The height (length) H is about a few centimeters or a few decimeters long which varies according to the total length of the resistor and the measurement unit. The width B (external width of the convex plate transverse to the resistor) of the vane is set to one to a few millimeters.
Using the method to be explained later, the normal stress Pv acting on the external plane of the vane is calculated from the dispersion (reduction) of stress caused by lateral ground reaction P, occurring a remote distance B from the resistor. As to be mentioned later, by increasing B to a few centimeters, shearing becomes possible where Pv is small.
Using this readily, the values of C and ϕ can be determined since Pv becomes small by gradually enlarging vane's B, where the cylindrical (or belt-shaped θ = 0) resistor is made with a large diameter by a taper similar to that mentioned above.

By penetrating the inclined resistor, the ground is greatly deformed in the horizontal direction and thus, the lateral ground reaction becomes larger. Since the modulus of deformation E of the ground is found from the number of combinations of reaction P and deformation Δ, the resistor must have an appropriate angle. Similarly, in order to measure C and ϕ, the angle of shear failure must be set according to several Pv and failure planes.

The angle θ formed by the resistor side surface and the penetration axis must be equal to or less than 5°. This angle makes the penetration along the resistor side surface while slipping without generating a sliding-surface remote from the resistor (17 of Fig. 11). It is also the angle of penetration while shearing the ground by increasing the roughness of the side surface. The inclination angle is set to θ ≤ 5° based on the general conclusions drawn from element tests of triaxial cells used in this invention, and researches on included angle of undisturbed samples although the limit inclination angle θr varies with properties of the ground and roughness of the resistor. Furthermore, even if the resistor satisfies the above conditions, when the length of the resistor is increased, the lateral deformation Δ of the ground becomes larger, then the ground yields and eventually reaches its failure point. Therefore, it is necessary to measure several times within the strain level (i.e., the ratio of initial radius r0 and Δ is within 1 to 10 percent) of yield pressure.

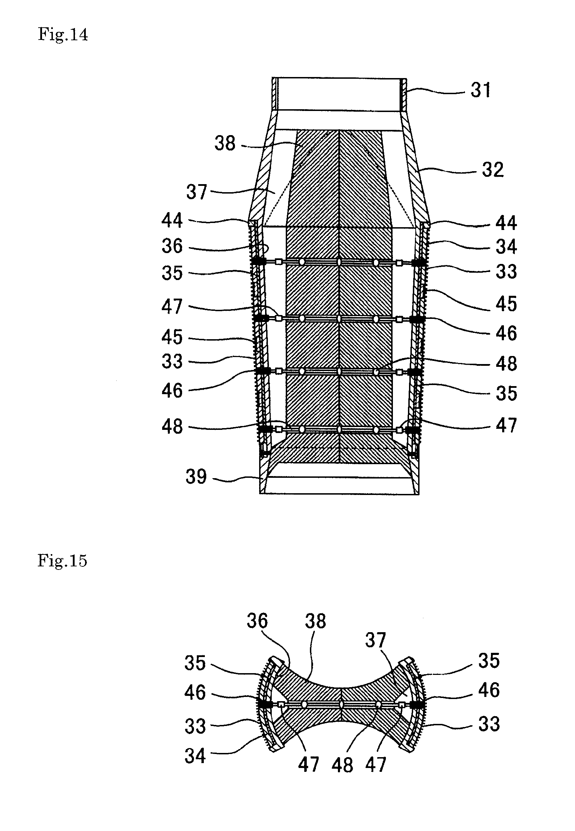

The following discusses the resistor that has a form of an arc or truncated cone with fractured cross-section of equal to or less than 5°. This is not practical since the tip of the cone is fragile due to its extremely acute angle. Also, it bends as it penetrates into the inhomogeneous ground because of its pointed tip; this problem is typical to conventional techniques. Therefore, basically, the tip of the truncated cone is cut. It penetrates the ground while digging its hollow part (self-boring, SB method) or penetrates through a borehole of relatively small diameter (pre-boring trimming, PBT method). However, based on conventional experiences, this may not be the best method with regards to speed of measurement and as an apparatus. Moreover, if the truncated cone-shaped resistor (especially in the case of a solid section) penetrates the ground even with a small θ, the soil is pushed by the resistor, thus, disturbed soil (about 40% of resistor's radius) thickly sticks around the resistor.
As result, the values of E, C and ϕ correspond to disturbed ground and not to natural ground. Considering this fact, as to be mentioned later (Fig. 14 to 26), modification of the resistor is suggested. That is, the greater part of the fractured section is cut, leaving only the side surface of the cone or the belt portion formed as an arc member. In this way, the ground near the measurement plane will not be disturbed and the soil near the fractured section is removed, making the penetration process easy.

When the resistor mentioned above penetrates into the ground, the ground moves by Δ, generating a lateral ground reaction P and by rotating the vane of the resistor, the ground shears in the form of a cone (or arc) at the tip of the vane. P and the shear strength τ are measured in several spots of different Δ where the radius at the tip increases according to θ. The modulus of deformation E can be found from several groups of P and Δ. The normal stress Pv acting on the shear plane is calculated using P. C and ϕ are determined according to their relationship with τ.

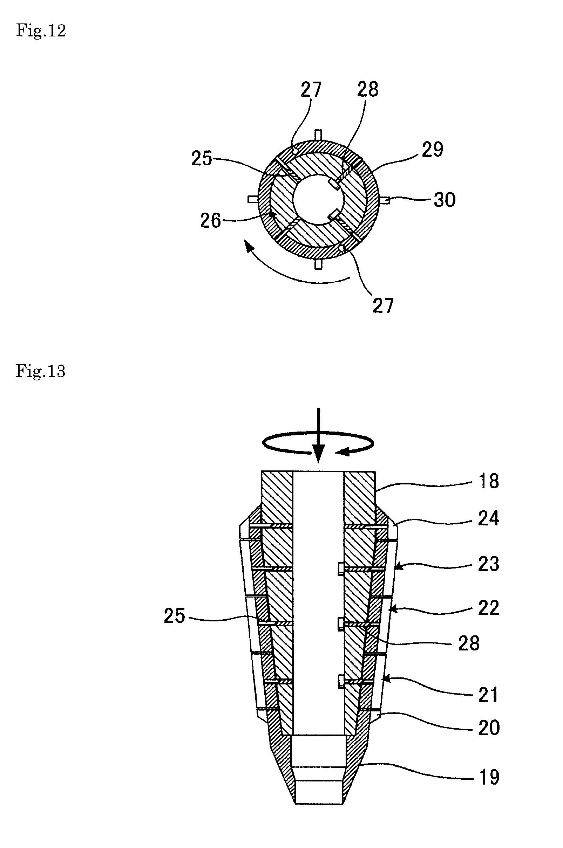

An example of a vane shear test is explained in Fig. 12 and 13. These Figures show the apparatus for a pressurization shear test with a hollow truncated cone. The load pipe 18 is attached at the tip of the rod which penetrates soft ground statically. If penetration is difficult by this method, a weight is used for blowing. The resistor is a hollow truncated cone and the shoe unit 19 is connected to a load pipe with a taper of θ ≤ 5° so that the ground would not be disturbed.
Also, a dummy vane 20 is attached at the upper part (in order to eliminate the resistance of the vane at the bottom). The main part of the resistor is cone-shaped of θ ≤ 3°. This is divided into three equal parts as pressurization shear units 1, 2 and 3 (21, 22 and 23), each are attached around the vane 30 of lateral width B in a single line. The most upper part is the upper dummy unit 24 attached to the dummy vane.
The pressurization shear unit is divided into two parts. One is the active rotation unit 26 that is connected with a torque transmission key 25 at the load pipe. The other part is the passive rotation unit 29 that is free to rotate and has a connection pin 28. A tensile force acts on the resistor when the load pipe penetrates. Lateral ground reaction P acts on each unit in a circular direction of the same center when the three pressurization shear units and dummy unit are dragged underneath. This is measured, using two load cells 27, as circumferential stress (theoretically both are equal).
The normal stress acting on the shear plane of the vane circumference is calculated using the measured pressure. When the load pipe is rotated, a rotational force is transmitted from the active rotation unit to the passive rotation unit. The resistance of the passive rotation unit that is displayed in a load cell can be used to compute the shear resistance torque and shear strength. According to this method, E, C and ϕ in the direction of depth can be calculated by repetition of the resistor's penetration and rotation.

The second claim of this invention is as follows. A part of the resistor's side surface or the whole surface is considered as a shear plane. The resistor's side surface has a roughness that prevents the ground and shear plane from slipping. As standard, the average roughness of the surface, that is the average height from trough to thread of the corrugated surface, should be greater than half of the mean diameter of the target soil. The commonly used resistor is formed to have a more flat surface by machine work.
However, the resistor used herein has a rough surface to prevent slipping and in order to measure E as well as shear strength τ by penetration. The shear surface has an average roughness that is greater than half of the mean diameter of the target soil based on past research results. The boundary surface did not slip and failed by shear slide.
In addition, unlike in the first claim, shear is continuous in the direction of depth; thus, the speed of the test becomes faster since rotation is not necessary. However, C and ϕ correspond to the residual strength τr and not to peak strength. This suggests that this method is useful and economical for interpolation and preliminary tests.

A cone-shaped resistor with a fractured section whose angle is equal to or less than 5°, or a resistor with an H-shaped section whose angle is equal to or less than 5°, is made to penetrate through the ground. Since the difference with the first claim is not rotational shear, the side surface is not required to be circular (the lateral ground reaction is different for uniform and partial displacement due to Δ). Therefore, the cross section is not necessary to be circular for truncated cones and it is possible to use an H-shaped section for the resistor where ground shears at the flange side. In the case of hollow and solid resistors, contents are similar to the first claim.

Figures 14 to 26 explain an example of a shear test with a rough surface. These figures show a resistor portion of pressurization shear apparatus for penetration of a resistor with a fractured section. Figures 14 to 26 correspond to the second claim's Fig. 14, 15, 26, 16, 17 and 18, respectively.

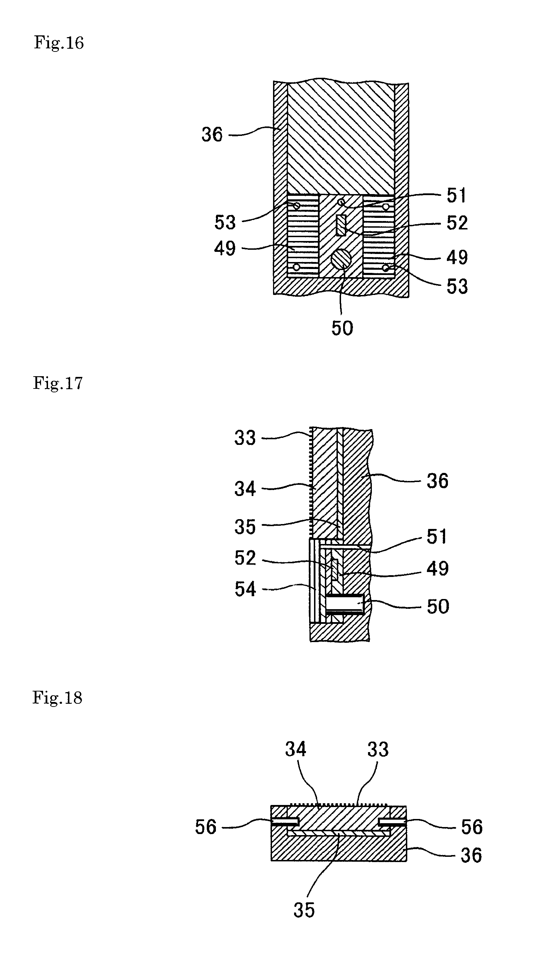

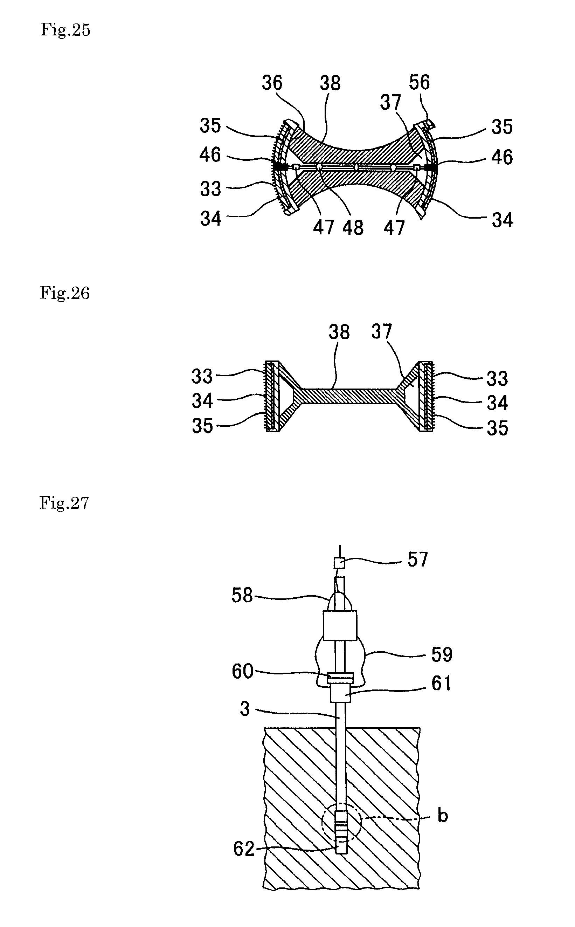

Figure 14 is the profile diagram of a resistor when cut at the center of the shear plane lengthwise. The horizontal plane indicated by the arrow is shown in Fig. 18. As for reference, the H-shaped section is shown in Fig. 26. The penetration rod is connected to the head of the resistor's rod joint 31. The penetration force is transmitted to two arc members through a diverging joint 32 from this pipe. The pair of arc member's ends become narrow by an angle of θ = 1° to 2° due to the joint member 38. The shear plane of the arc member is uniform from top to bottom but the radius of curvature of the exterior becomes smaller at the bottom. However, the tip of the shoe 39 has a constant curvature of θ = 0°.

The exterior of the pressurization shear member 33 consist of four units, each has a built-in gauge for measuring the lateral ground reaction P. The force P on both ends of the pressurization shear member that pierce through the hole of the joint member acts at a fixed screw 46. The compressive force generated in the coupling rod 48 for anti-buckling and centering is measured using the gauge for P.

The penetration force of the resistor is transmitted to the shoe and tip of the pressurization shear member using two load plates 36 that are connected to the joint member as one. Therefore, since the pressurization shear member is dragged by the shoe during penetration, the shear force of the ground is determined by measuring the tensile force at the boundaries of the pressurization shear member's units. Thus, the internal part of unit's boundary is grooved to generate a stress concentration, and the shear force is found from the tensile force of each unit using strain gauges.
Moreover, the end of the pressurization shear member is connected to the shoe as illustrated in Fig. 16 and 17. As shown in the figure, the pressurization shear member of a T-shape has a thin width and is flat on both sides in order to measure the stress at the center of the plate except for the curvature. A tension gauge 52 is affixed to both sides and a height control plate 49 is set over the plate. A fixed pin 50 is fixed by the load plate immediately above the shoe. The tension gauge is protected by a waterproof cushion, and the cover 54 is fixed with 4 tapped holes 53 and is flattened around the circumference.

The pressurization shear member is built with a surface average roughness of 0.5 mm. The end, as shown in Fig. 18, is set to have the same thickness with that of the pressurization shear member at both sides of the load plate. The pressurization shear member is inserted in between and a slide pin 56 is set at the side in order to the prevent separation of the load plate when sliding vertically.
Moreover, in order to eliminate the compressive force when rising, the upper part is concealed below the diverged joint (not illustrated). Furthermore, a thin slide sheet 35 is inserted between the pressurization shear member and the load plate, and is sealed by an elastic agent 44 in order to protect the connection plane of the member from mud.

Cables of various sensors pass through the holes 37 near the boundary of the joint member and the load plate and rise up to the rod joint. Then, it passes through the penetration rod (not illustrated), pulls up to the surface and connects to the measurement apparatus (not illustrated). Moreover, Fig. 26 shows a conception diagram for an H-shaped member and not for an arc member.

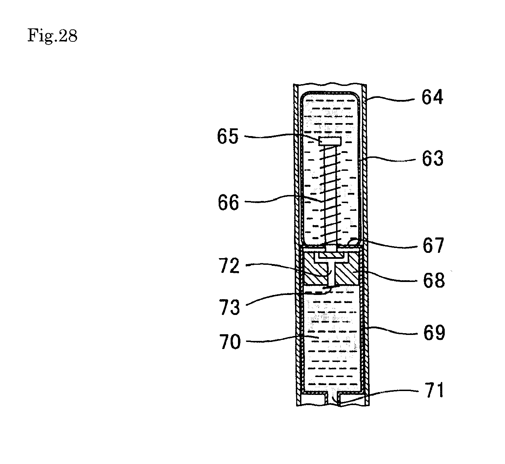

Next is the third claim of this invention. Conversion to a rapid penetration test is possible by increasing the transmission time of blow energy in the case of penetrating the resistor by blowing. Also, it solves the problem of noise reduction of collision. In addition, ground information is obtained by applying blow energy to a piston mass where lubrication fluid is scattered over the surface of the resistor, thus, friction resistance is reduced and penetration becomes easier. Below explains the examples shown in Fig. 27 and 28.

In Fig. 27, penetration is performed by blowing where the resistor 62 is attached at the tip of the rod 3. The hammer 5 is hanged (not illustrated) using a rope 58 with a sensor. When the hammer 5 is suddenly dropped, it triggers the initial time of fall and starts various measurement devices within a few seconds. When the hammer 5 is lifted up using the connection rope 59, the automatic knocking head 61 also rises up.
If the lifting is stopped, maintaining a constant distance from the hammer 5, the knocking head 61 automatically fixed to the rod 3 and the blow force of the hammer 5 is transmitted to the rod. Cushion material 60 is put over the knocking block 61 in order to extend the transmission time of blow energy by ten times (in order to apply to various type of ground, time is adjusted by the thickness of cushion material). As a result, multiple measurements of information from various sensors become possible and suggest a solution to noise reduction.

Figure 28 illustrates a mechanism example on how to make penetration easy by decreasing the friction of the resistor's surface (other than the shear plane). Inside the resistor or rod case 64 are the cylinder 69 and support for expansion and contraction 63, which is filled with a lubricant fluid 70. The piston 68 that is also used as a weight consists of a pipe fixed at the top as a support, a spring for holding 65, a dashboard 67 with holes attached to the cylinder and a spring 66 inserted in between. The piston touches the base of the dashboard on top of the cylinder.
The blow force is transmitted through the rod to the dashboard with holes. The piston becomes the downward force as a product of its mass and acceleration. The spring is compressed and the lubricant fluid is spitted out of the fluid ejection tunnel 71; a valve is installed (not illustrated) to prevent subsurface water from flowing backward to the end). In this case, the fluid inside the support for expansion and contraction at the top of the piston passes through the dashboard with holes and flows inside the cylinder. Then, while the piston gradually rises due to the spring force, it passes through the tunnel 72 installed inside the piston and flows to the cylinder below the piston from the valve 73. Moreover, easy expansion and contraction of the support becomes possible since the interior of the rod is connected to the surface and the pressure is set below atmospheric pressure (below hydraulic pressure during water flow). Also, dry coating or self-printing materials are applied to the surface in order to improve the reduction of friction on the resistor.

### Effect of the invention

As explained and readily apparent from the above, the following effects can be obtained in this invention. (1) Measurement of ground information required for design such as cohesion C, internal friction angle ϕ and modulus of deformation E from a single test by penetration (and rotation) through a resistor, becomes possible. In the conventional method, the test procedure is complicated even using exclusive test devices, C, ϕ and E are measured separately. In the most typical method, values are estimated using a correlation of alternative information (index information).

(2) C, ϕ and E are measurable by a single test that is extremely fast and uses apparatus that can be used by any person. The test apparatus such as the resistor can be used once for every test spot, compared with a conventional and common method where the apparatus has to be lifted up to the surface and then brought down every time a measurement is performed, thus, the test speed of this invention is significantly improved.

(3) The resistor according to this invention can obtain the ground information according to necessity by penetration as to be discussed later. It combines the penetration shear test which provides outline values at top speed and the pressurization rotation shear test which gives detailed measurements by penetration and rotation.
In the case of a thick homogeneous ground layer, the latter is used within a typical depth and the former is use in most part of the ground. This invention has a different test procedure compared with the conventional preliminary and detailed test methods. Also, there is a big difference in precision.

(4) This invention is applicable to various type of ground. Static penetration is applied in weak ground, penetration by blow is used in moderately hard ground and a pre-boring trimming method is employed in extremely hard ground. In comparison with conventional methods, different tests are used to different types and stiffness of ground.

(5) Using the apparatus mentioned above in different penetration methods, anchorage setting, heavy machineries for counterweight and heavy oversized vehicles, which are required in conventional methods, become unnecessary. Thus, the process becomes short and the transportation cost and other construction costs are reduced.

(6) Since a miniaturized apparatus is used, the test process becomes very fast and construction noise is reduced; thus it is good for the environment. For this reason, it can also be use in a residential area and narrow places.

### Brief description of the drawings

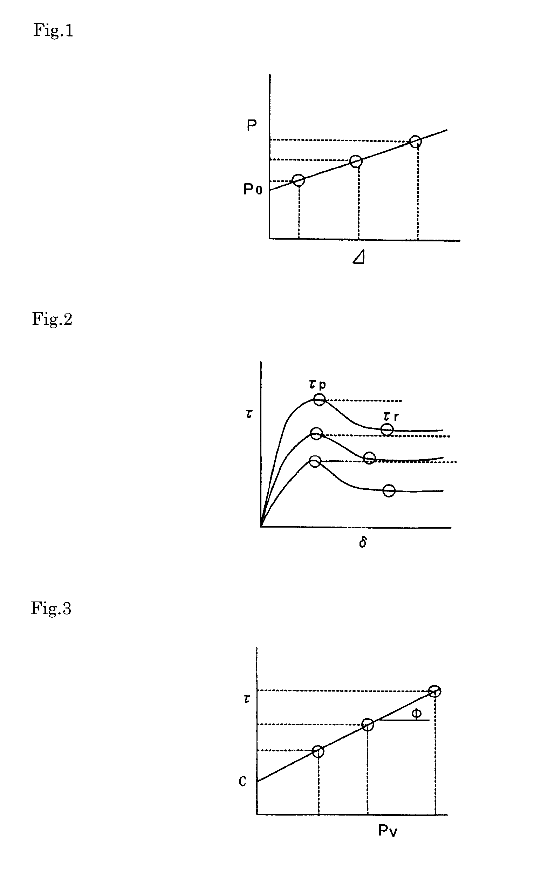

Fig. 1 illustrates the principle of this invention.
Fig. 2 illustrates the principle of this invention.
Fig. 3 illustrates the principle of this invention.
Fig. 4 illustrates the present ground test method in order to clarify the concept of this invention.
Fig. 5 illustrates the present ground test method in order to clarify the concept of this invention.
Fig. 6 illustrates the present ground test method in order to clarify the concept of this invention.
Fig. 7 illustrates the present ground test method in order to clarify the concept of this invention.
Fig. 8 illustrates the present ground test method in order to clarify the concept of this invention.
Fig. 9 illustrates the present ground test method in order to clarify the concept of this invention.
Fig. 10 illustrates the present ground test method in order to clarify the concept of this invention.
Fig. 11 illustrates the present ground test method in order to clarify the concept of this invention.
Fig. 12 shows a cross section of the first form of this invention.
Fig. 13 shows a cross section of the first form of this invention.
Fig. 14 shows a cross section of the second form of this invention.
Fig. 15 shows a cross section of the second form of this invention.
Fig. 16 shows details of the shear stress measurement of the second form of this invention.
Fig. 17 shows details of the shear stress measurement of the second form of this invention.
Fig. 18 shows details of the shear stress measurement of the second form of this invention.

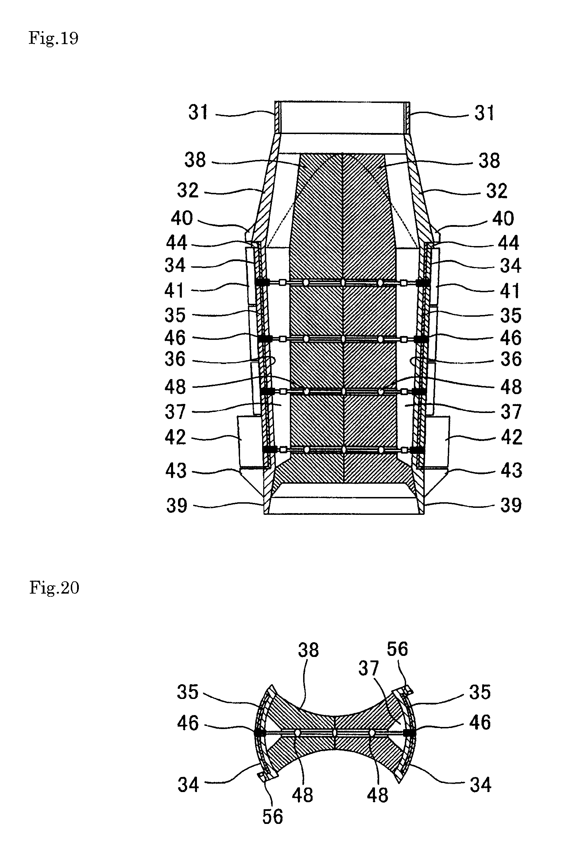

Fig. 19 shows a longitudinal section of the third form of this invention.
Fig. 20 shows a cross section of the third form of this invention.

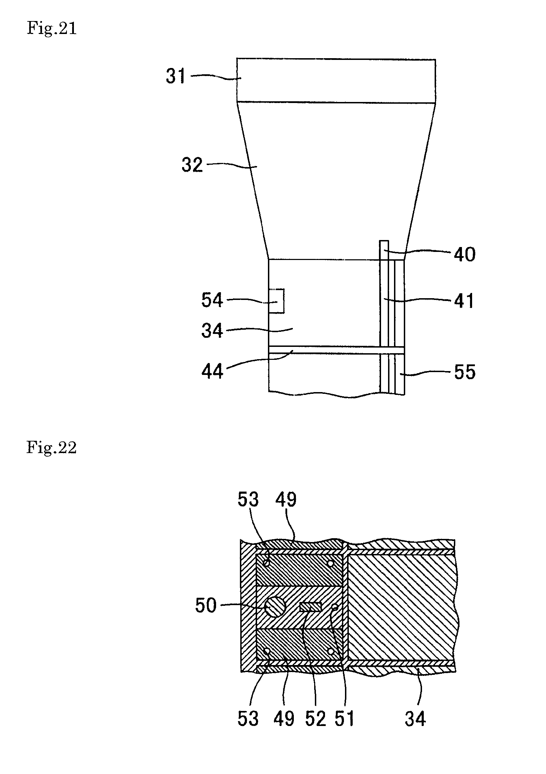

Fig. 21 shows a side view of the third form of this invention.
Fig. 22 shows details of the shear stress measurement of the third form of this invention.

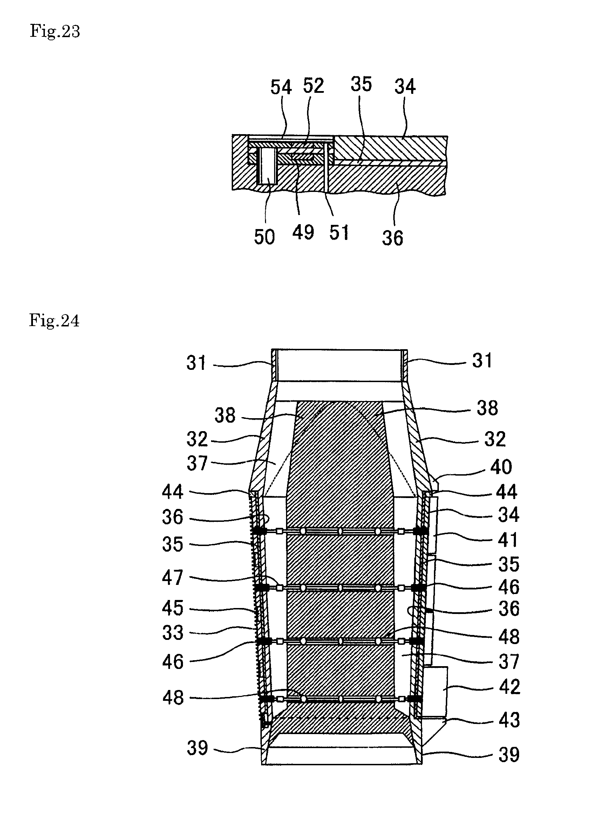

Fig. 23 shows details of the shear stress measurement of the third form of this invention.
Fig. 24 shows a longitudinal section of the fourth form of this invention.
Fig. 25 shows a cross section of the fourth form of this invention.
Fig. 26 shows a cross section of the fifth form of this invention.
Fig. 27 shows the total structure of the sixth form of this invention.
Fig. 28 shows a cross section of the apparatus for circulation fluid exudation of the sixth form of this invention.

### Description of reference signs

1 = base of hole
2 = pipe-shaped resistor
3 = boring rod
4 = knocking head
5 = hammer
6 = conical resistor
7 = rod
8 = resistor shaped as twisted pyramid
9 = weight
10 = vane
11 = double tube rod
12 = pressurization cell
13 = pressurization gauge using pressurization cell
14 = measurement pipe
15 = drawing force
16 = failure zone
17 = conical resistance of gentle inclination
18 = load transmission pipe
19 = shoe unit
20 = dummy vane
21 = pressurization shear unit
22 = pressurization shear unit
23 = pressurization shear unit
24 = dummy unit,
25 = torque transmission key
26 = active rotation unit
27 = load cell
28 = connection pin
29 = passive rotation unit
30 = vane
31 = rod joint
34 = pressurization plate
35 = sliding sheet
36 = load transmission plate
37 = cable hole
38 = connection material,
39 = shoe
40 = upper part of dummy vane
41 = single vane
42 = vane for static earth pressure
43 = lower part of dummy vane
44 = seal of elastic material
45 = tension gauge of different units
46 = fixed screw
47 = gauge for measuring P
48 = connection rod
49 = plate for adjusting height
50 = fixed pin
51 = hole for drawing cable
52 = tension gauge
53 = screw hole
54 = cover
55 = load transmission plate rib
56 = slide pin
57 = hammer sensor
58 = rope with hanged hammer
59 = connection rope
60 = cushion material
61 = automatic knocking head
62 = resistor
63 = support for expansion and contraction
64 = rod (case)
65 = spring stopper
66 = spring
67 = holed dashboard
68 = piston use for weight
69 = cylinder
70 = lubrication fluid
71 = fluid ejection tunnel
72 = internal tunnel
73 = valve for inverse stopping

### The best form for executing this invention

This invention is explained in detail below with its best form for execution using the figures.

The second claim of this invention (fractured cross section of penetration apparatus for the pressurization shear test) is explained in [0027] to [0032] and in Fig. 14 to 26. Since it uses a hollow conical resistor (with a combination of a self-boring test or trimming type of pre-boring test) and does not require the usual boring process, the speed of test is fast and operation is simple. Also, since it does not require the boring technique in usual cases, the precision of measurement becomes highly stable. The best form for conducting the second claim is shown in Fig. 14 and 15 that is equipped from side to side.

Figures 14 to 26 show an example regarding the first claim. These explain the resistor part (fractured cross section of penetration apparatus for the pressurization rotation shear test). It comprises Figs. 14, 21, 15, 26, 16 and 22. Figs. 19, 26, 20, 22 and 23 correspond to the first claim.

Figure 19 is the vertical section diagram of a resistor cut at the center of the shear plane. The cross section indicated by the arrow is shown in Fig. 20. The penetration rod is connected to the rod joint 31 on top of the resistor. The penetration force is transmitted to two arc members through a branch join 32 from this pipe. The pair of arc member's tips are narrowed by about θ = 1° using connection material 38. Although the width of arc member's shear plane is the same from top to bottom, the radius of curvature of the exterior plane becomes small at the bottom (the arc is from the center of the member). Provided that the curvature at the tip of shoe 39 is constant and θ = 0°.

The exterior pressurization plate 34 is composed of four units, each has a built in instrument for measuring the lateral ground reaction P. The fixed screw 46 accepts P that acts on the pressurization shear material in both sides of the hole which the connection material passes through. The compression force acting on a connection rod 48 for anti-buckling is measured using the gauge for P.

The penetration force of the resistor is transmitted at the tip of the shoe and the pressurization shear material from the branch joint mentioned earlier to the two load transmission plates 36 that is composed of connection materials. There are four units of a vane 41 attached to the pressurization plate. The vane in the bottom unit is the static earth pressure vane 42 which has a wider width B compared with the other units. This is for the purpose of measuring the shear resistance in a static earth pressure condition.
Also, in order to eliminate the disorder caused by the penetration of the shoe and the lateral ground reaction due to the diameter difference of the unit and the shoe where the unit's average diameter is slightly larger than the shoe. When the whole length of the resistor is penetrated and rotated, shearing of the ground occurs at the arc due to the vane. In order to cancel the shear resistance at the top and bottom of the vane, an upper dummy vane 40 and lower dummy vane 43 are attached (however, the two resistances acting on the static earth pressure vane's upper surface cancel each other in calculation).

The rotation shear torque is illustrated in Fig. 22 and 23. The pressurization shear material is mounted to the load transmission plate with a thin slide sheet 35 inserted in each unit. Figure 22 shows the side view in which the cover 54 is removed and Fig. 23 is the cross section at its center. Smooth and slippery material is used in the pressurization shear's surface. Its left side is narrowed in the shape of a letter T as illustrated in the figure.
Moreover, in order to measure the pressure at the center of plate, the front and back is shaved to a thin plate, a tension gauge 52 is attached in both sides, a height adjustment plate 49 is inserted at the top, and the right side of the load transmission plate is fixed using a fix pin 50. The tension gauge is protected by a waterproof cushion and the lead line passes the cable's drawer hole 51 and is drawn out from the cable hole 37.
The cover is fixed in the four screw holes 53 and its periphery is flattened. In the other end's right side, the edge of the load transmission plate is made to have the same thickness with that of the vane's height. The vane is connected to a slide pin 56 through the cushion sheet, and the pressurization shear plate is connected so that it is free to rotate while in contact with the load transmission plate. Therefore, when the load transmission plate is rotated and ground is sheared by the vane, tension occurs in the pressurization shear material through the fix pin.

The top of pressurization shear's highest unit is concealed in the bottom of the branch joint in order to prevent a compression force during lifting of the resistor (not illustrated). Similarly, the bottom of the pressurization shear's lowest part is concealed on top of the shoe's upper portion (not illustrated). In addition, the connection side of the member at the surface is protected by an elastic seal 44 against the invasion of trash.

The cables of different sensors pass through the cable holes 37 near the border of the connection material and the load transmission plate, rise up to the rod joint, pass through the penetration rod (not illustrated), pull up to the surface and are connected to the measurement device (not illustrated).

The best form is shown in Fig. 24 and 25, where Fig. 24 is the vertical section and Fig. 25 is the cross section, in which the first and second claims are combined as one. Using this apparatus, the penetration shear test and rotation shear test can be applied according to the situation in grounds consisting of various stratum constitutions, without replacement of the resistor. Furthermore, it can be applied to moderately hard ground by combining the use of the blowing penetration and lubricant exudation method of the third claim as shown in Figs. 27 and 28.

Using the above apparatus, C, ϕ and E are measured by the penetration of the resistor. Static penetration for relatively soft ground, rapid loading by blow penetration for harder ground, and a trimming boring method for much harder ground that is unusually difficult to penetrate.

The information of the ground is very important in the design of buildings and public work structures. Also, the relationship of the ground to its construction, execution and repair works is significant. Moreover, advanced technologies on countermeasures against mudslides and earthquake disasters and a protection method against disaster, are demanded increasingly. This invention solves the problems of in situ test methods which is an important field in the ground test industry, thus, it will reform the typical methods of this field and might replace these tests for the next generation.

## Claims

1. Provided is a searching method for acquiring ground information by mounting a resistor at the tip of a rod and by piercing the ground in the same direction. The searching method acquires the ground information on the strength and deformation of the ground, by piercing the ground with the resistor including a frustum of circular cone or an arc member containing a deficient sectional shape, in which the angle made between the side face of the resistor having vanes in the same direction as the piercing direction and the piercing direction is 5° or less upward and outward from the leading end of the resistor thereby to measure a plurality of transverse ground reactions, and by rotating the resistor having the blades at that depth thereby to measure a plurality of ground shearing forces.

2. Provided is a searching method for acquiring ground information by mounting a resistor at the tip of a rod. A part or the whole side of the resistor is considered as shear plane of ground. The resistor's side has coarseness so that the ground in contact to this surface will not slide. The resistor of a cone-shape has a fractured section whose angle is equal to or less than 5°, or a resistor with an H-shaped section whose angle is equal to or less than 5° is made to penetrate through ground. While generating a lateral ground reaction, the ground shears and fails in its coarse side. The characteristic of this searching method for acquiring ground information is determination of the ground's strength and deformation by measuring several sets of displacements, ground reactions and shear forces.

3. Provided is a searching method for acquiring ground information by mounting a resistor at the tip of a rod. When penetrating the resistor by blowing the knocking head of a hammer, cushion material is mounted between the hammer and knocking head. Since the transmission of impact energy is delayed, loading time extends up to approximately 10 times. The starting time of dropping of the hammer is detected using a sensor. The ground reaction and shear force are measured several times within loading time. In order to reduce the noise of the blowing of metal and friction resistance due to the blowing energy, the piston that is used as a weight is suspended inside the cylinder filled with lubricant and mounted to the inside or upper part of the resistor using elastic material. The weight vibrates vertically when blown and due to the fluctuation of pressure, the lubricant flows through the tunnel connected to the cylinder and exudes to the target side. The energy transmission time due to reduction of penetration resistance and blow penetration method is extended and rapid loading is performed. Also, noise cause by blowing is reduced. These characterizes this searching method for acquiring ground information.
